# EUROPÄISCHE PATENTSCHRIFT

(11) **EP 0 452 449 B1**
(45) Veröffentlichungstag und Bekanntmachung des Hinweises auf die Patenterteilung: **19.06.1996**
(21) Anmeldenummer: 90916094.7
(22) Anmeldetag: 08.11.1990
(51) Int. Cl.: A01B 45/02

(54) **BEARBEITUNGSGERÄT FÜR DIE TIEFENLOCKERUNG VON BÖDEN**
DEVICE FOR LOOSENING SUB-SOIL
INSTRUMENT DE SOUS-SOLAGE

(30) Priorität: 08.11.1989 DE 3937211
(43) Veröffentlichungstag der Anmeldung: 23.10.1991
(73) Patentinhaber: WIEDENMANN GMBH, D-89192 Rammingen (DE)
(72) Erfinder: Wiedenmenn, Georg, D-7901 Rammingen (DE)
(74) Vertreter: Flügel, Otto, Dipl.-Ing.
(86) Internationale Anmeldenummer: DE9000844
(87) Internationale Veröffentlichungsnummer: WO9107076

(56) Entgegenhaltungen:
- EP-A- 37 595
- US-A- 3 204 703
- US-A- 4 602 687

## Beschreibung

Die Erfindung betrifft ein Bearbeitungsgerät für die Tiefenlockerung von Böden gemäß dem Oberbegriff des Anspruchs 1. Es ist eine Reihe von Geräten bekannt, die mit Werkzeugen Öffnungen in einen zu bearbeitenden Boden einbringen, sei es zum Zwecke der Ausnehmung für das Eingeben von Saatgut, sei es zur Belüftung des Bodens und/oder dessen Drainierung. Vor allem für den letzteren Zweck soll dabei die durch das Einstechen des Werkzeuges an der Bodenoberfläche entstehende und nach Entfernen verbleibende Öffnung klein bleiben, während im tiefergelegenen Bodenbereich eine größere Werkzeugbewegung quer zur Stechrichtung erzeugt werden soll.

Es ist grundsätzlich bekannt, solche Stechwerkzeuge in einer vertikalen, in Fahrtrichtung verlaufenden Ebene verschwenkbar an einem steuerbaren Werkzeugträger zu lagern und unter der Kraft einer Feder gegen einen Anschlag zu bewegen, der sicherstellt, daß das Stechwerkzeug vor Eindringen in den Boden eine bestimmte Ausrichtung zu diesem aufweist, die insbesondere mit der Druckbelastungsrichtung bei Eindringen in den Boden zumindest annähernd übereinstimmt. Das Einstechen der Werkzeuge in den Boden geschieht bei in Fahrtrichtung bewegtem Gerät, durch welche Fahrbewegung das in den Boden eingedrungene Werkzeug in gewisser Weise verschwenkt, jedoch nicht so weit, daß bei Herausziehen des Werkzeuges eine Aufbrechbewegung der Bodenoberfläche erfolgt. Die geringe Versetzbewegung im Boden aus der durch den Anschlag vorgegebenen Ausrichtlage heraus führt das Werkzeug gegen die Kraft der vorerwähnten Feder aus. Nach Verlassen des Bodens wird das Werkzeug unter der Kraft der Feder wieder gegen den Anschlag und damit in die für den erneuten Einstechvorgang vorgesehene Ausrichtposition verschwenkt. Die Betätigung des Werkzeuges bzw. von Gruppen solcher Werkzeuge geschieht in an sich bekannter Weise mit Hilfe eines Kurbeltriebs, der im Zuge der Fahrbewegung entsprechend der gewünschten Einstechdichte betätigt wird.

Aus der japanischen Offenlegungsschrift JP-A-55-89538 geht ein Gerät der in Rede stehenden Art hervor, das eine Parallellenkereinrichtung aus zwei Lenkern zeigt, die einen Endes an dem Chassis bzw. einem demgegenüber einstellbaren Rahmen und anderen Endes an dem Träger für Stechwerkzeuge unmittelbar angelenkt sind. Der Kurbeltrieb arbeitet auf den Träger der Stechwerkzeuge. Beide Lenker bilden ein Parallelogramm im unbelasteten Zustand und sind für den Einstechvorgang jeweils gegen Federkraft längenveränderlich, also als Teleskoprohre ausgebildet, denen jeweils eine Feder parallel geschaltet ist. Dadurch kann das Stechwerkzeug nach Eindringen in den Boden unter Längenänderung der Lenker verschwenken.

Der Erfindung liegt die Aufgabe zugrunde, die Werkzeuge eines solchen Gerätes derart gelenkt zu führen, daß ihre Ausrichtung vor Eindringen in den Boden möglichst unabhängig von der jeweils vorgesehenen, unterschiedlich einstellbaren Einstechtiefe ist. Eine solche Einstechtiefenbestimmung kann man in einfacher Weise durch die höhenversetzte Einsteilbarkeit zwischen einem Tast- bzw. Stützrad und dem Gerätechassis verwirklichen.

Erfindungsgemäß wird zur Lösung dieser Aufgabe das im kennzeichnenden Teil des Anspruchs 1 definierte Bearbeitungsgerät an einem Lenkgestänge gehalten, das bei Ausrichtung des Werkzeuges in die Einstechposition, also unter federbelasteter Anlage an dem Anschlag zumindest in etwa ein Lenkerparallelogramm bildet. In dieses Lenkerparallelogramm ist der Chassisteil zwischen zwei chassisfesten Lagern, parallel gegenüberliegend ein Verbindungshebel zwischen einer Anlenkstelle des Werkzeuges und einem Führungshebel sowie ein Arbeitshebel zwischen einem der chassisfesten Lager und dem Schwenklager des Stechwerkzeugs bzw. dessen Halterung und diesem parallel gegenüberliegend der Führungshebei eingeschlossen. Dieses Parallelogramm sorgt dafür, daß die Werkzeugausrichtung unabhängig von der eingestellten Eindringtiefe aufrechterhalten bleibt, so daß es einer Einstellung des Anschlages in Abhängigkeit der Einstechtiefe nicht bedarf; die Einstellbarkeit des Anschlages ist somit nur für die Bestimmung der gewünschten Werkzeugausrichtung an sich erforderlich.

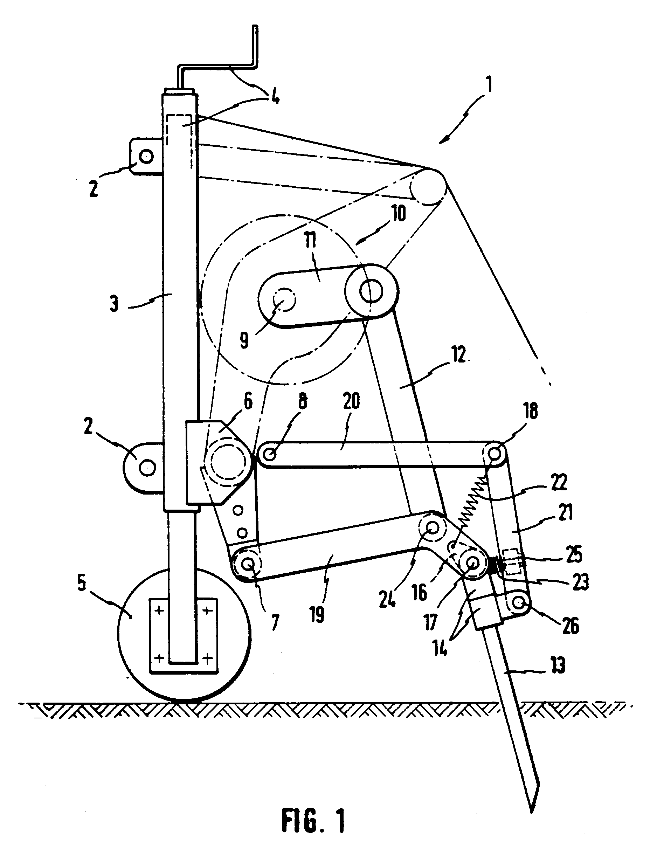

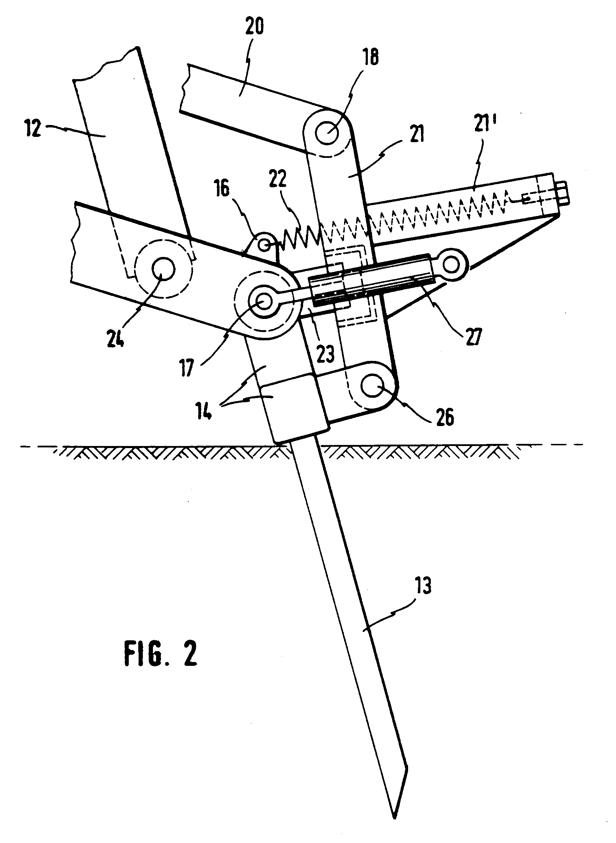

Bevorzugte Ausführungen der Erfindung ergeben sich aus den Unteransprüchen, insbesondere im Zusammenhang mit den in der Zeichnung wiedergegebenen Ausführungsbeispiele, deren nachfolgende Beschreibung die Erfindung näher erläutert, wobei Fig. 1 eine Seitenansicht des Gerätes einer ersten Ausführung und Fig. 2 einen Anschnitt einer modifizierten Ausführung zeigt.

Das insgesamt mit 1 bezeichnete Arbeitsgerät weist bei 2 Anschlüsse auf, die symbolisch die Anbaubarkeit an einen Traktor oder dergleichen selbstfahrendes Arbeitsgerät andeuten sollen. An dem Gerätechassis 3 - hier nur schematisch angedeutet - ist mit Hilfe einer handbetätigten Spindeleinrichtung 4 ein Stützrad 5 höhenverstellbar gehalten. An dem Gerätechassis 3 ist eine der Anzahl der gleichzeitig in derselben Arbeitsphase zu betätigenden Werkzeuge, Werkzeugpaare oder Werkzeuggruppen entsprechende Zahl von Konsolen 6 ausgebildet, welche chassisfeste Lager 7 und 8 aufweisen. Ebenfalls diesen Einzelwerkzeugen, Werkzeugpaaren bzw. Werkzeuggruppen zugeordnete Kurbeltriebe 10 sind um eine gemeinsame Welle 9 gelagert. Die Kurbelarme 11 der den Werkzeugen, Werkzeugpaaren bzw. Werkzeuggruppen zugeordneten Kurbeltriebe sind zueinander winkelversetzt angeordnet, so daß die Werkzeuge, Werkzeugpaare oder Werkzeuggruppen nacheinander die Bodenbearbeitung vornehmen, was sich im Zuge der Fortbewegung des Gerätes bzw. der Kurbelbewegungen zyklisch wiederholt. Die an dem der Welle 9 abgewandten Ende der Kurbelarme 11 angeordneten Kurbelstangen 12 sind an die den einzelnen Werkzeugen, Werkzeugpaaren oder Werkzeuggruppen zugeordneten, an die Konsolen angeschlossene Lenkgestänge angelenkt, wie dies nachstehend noch näher erläutert wird.

Von der Vielzahl der vorgesehenen Stechwerkzeuge und deren Lenkgestängen und Kurbeltrieben zeigt die schematische Seitenansicht des Ausführungsbeispieles nur eines. Das Stechwerkzeug 13 ist fest in einer Halterung 14 verankert. An der Halterung ist ein seitlicher Ausleger 16 ausgebildet, der von einer Schwenkachse 17 der Halterung 14 radial abragend verläuft. Zwischen dem radial äußeren Ende des Auslegers 16 und einer Gelenkverbindungsstelle 18 zwischen zwei Hebeln 20 und 21 ist eine vorgespannte Zugfeder 22 eingeschaltet, die das Werkzeug mit seiner Spitze in Fahrtrichtung zu verschwenken sucht.

An dem chassisfesten Lager 7 der Konsole 6 ist das eine Ende eines Arbeitshebels 19 angelenkt, dessen anderes Ende die Verschwenklagerung des Werkzeughalters 14 aufnimmt und zwar an einer Anlenkstelle 17 unter Bildung der Schwenkachse für das Werkzeug. An dem anderen chassisfesten Lager 8, das sich in Relation zu dem zu bearbeitenden Boden oberhalb des Lagers 7 befindet, ist das eine Ende eines Führungshebels 20 angelenkt, dessen anders, in Fahrtrichtung rückwärts weisendes Ende die Gelenkverbindungsstelle 18 aufnimmt, an der das obere Ende eines Verbindungshebels 21 angelenkt ist, dessen unteres Ende bei 26 gelenkig an eine feste Auskragung der Werkzeughalterung 14 angelenkt ist. Im Nahbereich der Anlenkstelle 17 von dieser aus gesehen in einem abgewinkelten Bereich des Arbeitshebels 19 in Richtung auf die in Fahrtrichtung nach vorn liegende Anlenkung an das erste chassisfeste Lager 7 gesehen ist ein Einleitgelenk ausgebildet, an welches das dem Kurbelarm 11 abgewandte Ende der Kurbelstange 12 des zugehörigen Kurbeltriebes 10 angelenkt ist und die Stechkraft einleitet.

Die Anordnung der Hebel ist derart getroffen, daß der Abstand zwischen dem festen Lager 7 und der Anlenkstelle 17 den Abstand zwischen dem Lager 8 und der Gelenkverbindungsstelle 18 entspricht und der Abstand zwischen den chassisfesten Lagern 7 und 8 demjenigen zwischen der Anlenkstelle 17 und der Gelenkverbindungsstelle 18 gleicht. Die vorstehenden Abstände lassen sich durch gedachte Lenker- die geradlinig diese Abstände übergreifen, zu einem Lenkerparallelogramm zusammensetzen. Deshalb bleibt das in diesem Parallelogramm gehaltene und gegen den Anschlag anliegend verschwenkte Werkzeug unabhängig von der Einstechtiefe in derselben Ausrichtung vor Eindringen in den Boden und nach dessen Verlassen. Innerhalb des Bodens findet durch die Bewegung in Fahrtrichtung eine Verschwenkung des Werkzeuges statt, das sich dabei unter Spannen der Feder 22 und Verschwenken um die Anlenkstelle 17 von einem Anschlag 23 entfernt, der an dem Verbindungshebel 21 angeordnet ist und dessen Anschlagfläche im Nahbereich der Anlenkstelle 17 an der Werkzeughalterung 14 angreift. Der Anschlag 23 ist mit Hilfe einer Verstelleinrichtung 25 hinsichtlich des Abstandes seiner Anschlagfläche von dem Hebel 21 verstellbar, wodurch die Ausrichtung des Werkzeuges bzw. der Ausrichtwinkel zwischen Werkzeug und Boden einstellbar ist.

Wenn das in den Boden eingestochene Werkzeug unter der Belastung der Fahrbewegung eine Verschwenkbewegung um die Verschwenkachse an der Anlenkstelle 17 ausführt, dann wird der Werkzeugschaft im Bereich der Bodenoberfläche durch die dort gegebene größere Verdichtung bzw. Festigkeit gehalten und vollführt eine Verschwenkbewegungsstrecke vornehmlich im Bereich seiner Spitze, wodurch der Boden entsprechend unterhalb der Bodenoberfläche stärker bewegt und damit aufgelockert wird. Bei dieser Verschwenkung fort von dem Anschlag und unter Spannen der Feder 22 wird das Lenkerparallelogramm insoweit geöffnet, nimmt aber durch Zurückverschwenken des Werkzeuges unter der Kraft der Feder bei Verlassen des Bodens seine Gestalt wieder an.

Grundsätzlich kann zur Dämpfung der unter der Kraft der Feder erfolgenden Verschwenkbewegungen des Werkzeuges und dessen Auftreffen auf den Anschlag auftretenden Bewegungsgröße ein gesonderter Dämpfer beispielsweise ein üblicher Stoßdämpfer vorgesehen werden. Ein solcher kann aber auch in dem Anschlag integriert oder durch diesen selbst verwirklicht sein.

Durch die Anordnung des Führungshebels oberhalb des Arbeitshebels hält man den Raum um das Werkzeug herum frei, so daß dessen Einstechbewegung auch bei unebenem oder mit Steinen etc. belegtem Boden nicht behindert ist. Das gilt auch hinsichtlich der Anordnung der Feder, die ansonsten beliebig angeordnet und auch als Druckfeder vorgesehen sein kann, wenn sie nur das Werkzeug gegen den Anschlag beaufschlagt.

Der Ausschnitt gemäß Fig. 2 zeigt eine baulich anders gestaltete Anordnung der Anschlag-Feder-Gruppe. Der Verbindungshebel 21 ist mit einer Abstützung 21' versehen, an dem das dem Stechwerkzeug (13) abgewandte Ende der Feder 20 festgelegt ist, und zwar vorzugsweise in Längsrichtung der Feder einstellbar, und an dem das eine Ende eines als Stoßdämpfer ausgebildeten Dämpfungswerkzeug 27 angelenkt ist, dessen anderes Ende an der Anlenkstelle 17 angreift und das somit parallel zu dem Anschlag 23 wirksam ist, d.h. der Stoßdämpfer dämpft die unter der Kraft der Feder 22 auf das den Boden verlassende Stechwerkzeug ausgeübte Rückstellbewegung, bis der Anschlag (23) in Funktion tritt.

## Patentansprüche

1. Fahrbares oder an ein Fahrzeug anzuschließendes Bearbeitungsgerät für die Tiefenlockerung von Böden, bspw. unterhalb einer Grasnarbe, mit einem gradlinig höllenverstellbaren Chassis und daran einer im wesentlichen senkrecht zur Fahrtrichtung verlaufend angeordneten Aufeinanderfolge von Stechwerkzeugen (13), deren jedes mittels eines Parallellenkergestänges (19, 20) in einstellbarer Ausrichtung auf den Boden geführt, zur Ausführung des Stechvorganges mittels eines Kurbeltriebs (10) in etwa vertikaler und in Fahrtrichtung verlaufender Ebene auf- und abbewegbar und in dieser Ebene unter Federkraft gegen einen Anschlag (23) verschwenkt gehalten ist, wobei das Parallellenkergestänge einen einen Endes an einen ersten chassisfesten Lager (7) und anderen Endes an dem Stechwerkzeug (13) bzw. einer dieses fest aufnehmenden Halterung (14) angelenkten Arbeitshebel (19) und einen einen Endes an einem zweiten chassisfesten Lager (8) angelenkten und anderen Endes mit dem Stechwerkzeug (13) bzw. dessen Halterung (14) gelenkig verbundenen Führungshebel (20) aufweist,
**dadurch gekennzeichnet**,
daß die gelenkige Verbindung zwischen dem Stechwerkzeug (13) bzw. dessen Halterung (14) und dem Führungshebel (20) einen an dem Führungshebel (20) einerseits (18) und an dem Stechwerkzeug (13) bzw. dessen Halterung (14) andererseits (26) angelenkten Verbindungshebel (21) umfaßt, daß der Arbeitshebel (19) und der Führungshebel (20) als starre Lenker ein Parallelogramm bilden, derart, daß der Abstand zwischen dem ersten chassisfesten Lager (7) und der Anlenkstelle (17) des Arbeitshebels (19) an dem Stechwerkzeug (13) bzw. dessen Halterung (14) etwa demjenigen zwischen dem zweiten chassisfesten Lager (8) und der Gelenkverbindungsstelle (18) zwischen Führungshebel (20) und Verbindungshebel (21) entspricht und der Abstand zwischen dem ersten (7) und dem zweiten (8) chassisfesten Lager etwa gleich ist demjenigen zwischen der Anlenkstelle (17) des Arbeitshebels (19) an dein Stechwerkzeug (13) bzw. dessen Halterung (14) und der Gelenkverbindungsstelle (18) zwischen Führungshebel (19) und Verbindungshebel (21), wodurch sich das Lenkerparallelogramm ergibt, dessen der chassisfesten Lenkerverbindung zwischen den beiden chassisfesten Lagern (7, 8) etwa parallel gegenüberliegender Abstand zwischen der Anlenkstelle (17) und der Gelenkverbindungsstelle (18) durch Verschwenken des Stechwerkzeugs (13) bzw. dessen Halterung (14) von dem Anschlag (23) fort im Zuge der Ausführung der Lockerungsbewegung im Boden gegen die Kraft nur einer Feder (22) längenveränderlich ist, daß der Führungshebel (20) in bezug auf den zu bearbeitenden Boden bzw. parallel zur Bodenebene gesehen oberhalb des Arbeitshebels (19) verläuft, an den die Kurbelstange (12) des Kurbeltriebes (10) angelenkt ist, und daß der Anschlag (23) zwischen dem Verbindungselement (21) und dem Stechwerkzeug (13) bzw. dessen Halterung (14) angeordnet ist, wobei das Chassis (3) mittels einer Spindeleinrichtung (4) höhenverstellbar gehalten ist.

2. Gerät nach Anspruch 1,
**dadurch gekennzeichnet**,
daß der Anschlag (23) hinsichtlich des Abstandes zwischen seiner Anschlagfläche und seiner Halterung längenveränderlich einstellbar ausgebildet ist, vorzugsweise von der Seite des Verbindungshebels (21) aus verstellbar.

3. Gerät nach Anspruch 1 oder 2,
**dadurch gekennzeichnet**,
daß der Anschlag (23) zugleich als Dämpfer (stoßabsorbierendes Material) ausgebildet ist oder daß ein gesondertes Dämpfungswerkzeug (27) (Stoßdämpfer) parallel zu dem Anschlag (23) wirkend vorgesehen ist, das vorzugsweise oberhalb der Werkzeughalterung (14) angeordnet ist.

4. Gerät nach einem der Ansprüche 1 bis 3,
**dadurch gekennzeichnet**,
daß die Feder (22) unter einem Hebelarm (16) um die Anlenkstelle (17) des Arbeitshebels (19) an dem Stechwerkzeug (13) bzw. dessen Halterung angreift und mit ihrem dem werkzeugseitigen Anschlußende abgewandten Ende an der Führung (20, 21), insbesondere an der Gelenkverbindungsstelle (18) zwischen Führungshebel (20) und Verbindungshebel (22) oder an dem Verbindungshebel (21) direkt angreifend gehalten ist.

5. Gerät nach einem der Ansprüche 1 bis 4,
**dadurch gekennzeichnet**,
daß der Anschlag (23) und das Dämpfungswerkzeug (27) und vorzugsweise auch die Feder (22) eine Baueinheit bilden.

6. Gerät nach einem der Ansprüche 1 bis 5,
**dadurch gekennzeichnet**,
daß der Verbindungshebel (21) zusammen mit dem Führungshebel (20) den Arbeitshebel (19) umgreifend angeordnet ist.

7. Gerät nach einem der Ansprüche 1 bis 6,
**dadurch gekennzeichnet**,
daß die Kurbelstange (12) im Nahbereich der Anlenkstelle (17) zwischen dem Stechwerkzeug (13) bzw. dessen Halterung (14) und dem Arbeitshebel (19) an diesem angelenkt (24) ist.

8. Gerät nach einem der Ansprüche 1 bis 7,
**dadurch gekennzeichnet**,
daß die Stechwerkzeuge (13) bzw. deren Halterungen (14) Paarweise oder in größeren Gruppen jeweils an einem Lenkgestänge (19, 20, 21) nebst Zuordnung von Anschlag (23) und Feder (22) sowie Kurbeltrieb (10) angeordnet sind und zumindest zum Teil an Kurbeltrieben (10) mit Kurbelarmen (11) voneinander abweichender Winkelstellung betätigt sind.

## Claims

1. A device for the loosening of subsoil, for example below the topsoil of a lawn, which can be driven or is intended to be connected to a vehicle, comprising a rectilinearly height-adjustable chassis and a succession of piercing tools (13) arranged on said chassis so as to extend substantially at right angles to the direction of travel, each of which piercing tools is guided by means of parallel guide rods (19, 20) so as to be adjustably oriented in the direction of the soil, and each of which tools may be moved upwards and downwards in a plane, which is substantially vertical and extends in the direction of travel, by means of a crank gear (10), to carry out the piercing operation, and each of which tools is, in said plane, pivotally held under spring force against a stop (23), the parallel guide rods comprising a working lever (19), one end of which is hinged to a first bearing (7) fixed to the chassis and the other end of which is hinged to the piercing tool (13) or to a support (14) in which the piercing tool is fixedly mounted, and having a guide lever (20), one end of which is hinged to a second bearing (8) fixed to the chassis and the other end of which is pivotally connected to the piercing tool (13) or the mounting (14) thereof,
characterised in that the pivotal connection between the piercing tool (13) or the mounting (14) thereof and the guide lever (20) comprises a connecting lever (21) whose one end (18) is hinged to the guide lever (20) and whose other end (26) is hinged to the piercing tool (13) or the mounting (14) thereof, that the working lever (19) and the guide lever (20) are rigid rods forming a parallelogram such that the distance between the first bearing (7) secured to the chassis and the pivot point (17) of the working lever (19) provided on the piercing tool (13) or the mounting (14) thereof, substantially corresponds to the distance between the second bearing (8) secured to the chassis and the pivotal connecting point (18) between the guide lever (20) and the connecting lever (21), and that the distance between the first (7) and second (8) bearings secured to the chassis is substantially identical to that between the pivot point (17) of the working lever (19) provided on the piercing tool (13) or the mounting (14) thereof and the pivotal connecting point (18) between the guide lever (19) and the connecting lever (21), thereby forming a parallelogram of rods whose spacing between the pivot point (17) and the hinged connecting point (18), which spacing is substantially parallel to the rod connection secured to the chassis between the two bearings (7, 8), secured to the chassis, may be longitudinally adjusted by pivoting the piercing tool (13) or the mounting (14) thereof away from the stop (23) against the force of only one spring (22) during the course of carrying out the loosening movement of the soil, so that the guide lever (20) when viewed relative to the soil to be worked or parallel to the plane of the soil, extends above the working lever (19) to which the connecting rod (12) of the crank gear (10) is hinged, and that the stop (23) is arranged between the connecting member (21) and the piercing tool (13) or the mounting (14) thereof, the chassis (3) being held so as to be vertically adjustable by means of a spindle device (4).

2. A device according to claim 1, characterised in that the stop (23) is of an adjustable construction so that the distance between its contact face and its mounting may be longitudinally altered, preferably from the side of the connecting lever (21).

3. A device according to claim 1 or 2, characterised in that the stop (23) simultaneously acts as a damper (shock-absorbing material), or that a separate damping tool (27) (shock absorber) is provided so as to act in parallel to the stop (23), said damping tool preferably being arranged above the tool support (14).

4. A device according to one of claims 1 to 3, characterised in that the spring (22) engages under a lever arm (16) about the pivot point (17) of the working lever (19) provided on the piercing tool (13) or the support thereof, and is held, by means of its end remote from that connecting it to the tool, so as to directly engage on the guide (20, 21), more particularly on the hinge connecting point (18) between the guide lever (20) and the connecting lever (22), or on the connecting lever (21).

5. A device according to one of claims 1 to 4, characterised in that the stop (23) and the damping tool (27) and preferably also the spring (22) form a component part.

6. A device according to one of claims 1 to 5, characterised in that the connecting lever (21) and the guide lever (20) are arranged so as to embrace the working lever (19).

7. A device according to one of claims 1 to 6, characterised in that within the vicinity of the pivot point (17) arranged between the piercing tool (13) or the support (14) thereof and the working lever (19), the connecting rod (12) is hinged (24) to said working lever (19).

8. A device according to one of claims 1 to 7, characterised in that the piercing tools (13) or the supports (14) thereof are, in each case, arranged in pairs or in larger groups on one guide rod (19, 20, 21) together with the associated stop (23) and spring (22) as well as the crank gear (10) and are actuated, at least partly, on crank gears (10) by means of crank arms (11) which have differing angular positions.

## Revendications

1. Instrument mobile ou monté sur un véhicule pour le sous-solage par exemple en-dessous d'un gazon, comprenant un châssis réglable en hauteur de manière rectiligne et portant une succession d'outils d'enfoncement (13) disposée de manière essentiellement perpendiculaire à la direction de déplacement, et qui est guidée dans un alignement réglable par rapport au sol par l'intermédiaire d'une tringlerie en parallélogramme (19, 20), pour effectuer un mouvement d'enfoncement, à l'aide d'une transmission à manivelle (10), en étant mobile en montée et descende dans un plan sensiblement vertical, correspondant à la direction de circulation, et dans ce plan, l'outil est basculé contre une butée (23), contre la force d'un ressort, et la tringlerie en parallélogramme comporte un levier actif (19) relié par une extrémité à un premier palier solidaire du châssis et par l'autre extrémité à l'outil d'enfoncement (13) ou à un support (14) recevant solidairement cet outil, et un levier de guidage (20) relié par une articulation de manière articulée par une extrémité au second palier (8) solidaire du châssis et par l'autre extrémité avec l'outil d'enfoncement (13) ou son support (14), caractérisé en ce que la liaison articulée entre l'outil d'enfoncement (13) ou son support (14) et le levier de guidage (20) comprend un levier de liaison (21) relié d'un côté (18) au levier de guidage (20) et d'autre part (26) à l'outil d'enfoncement (13) ou à son support (14), le levier actif (19) et le levier de guidage (20) formant comme bras rigides, un parallélogramme de façon que la distance entre le premier palier (7) solidaire du châssis et le point d'articulation (17) du levier actif (19) sur l'outil d'enfoncement (13) ou son support (14) correspond sensiblement à la distance entre le second palier (8) solidaire du châssis et le point d'articulation (18) entre le levier de guidage (20) et le levier de liaison (21), et que la distance entre le premier palier (7) solidaire du châssis et le second palier (8) solidaire du châssis, est sensiblement la même que celle comprise entre le point d'articulation (17) du levier actif (19) sur l'outil d'enfoncement (13) ou son support (14), le point d'articulation (18) entre le levier de guidage (19) et le levier de liaison (21) de manière à former un parallélogramme à bras dont l'écartement de la liaison de bras solidaire du châssis entre les deux paliers (7, 8) solidaires du châssis, sensiblement parallèlement en regard entre le point d'articulation (17) et le point d'articulation (18), par basculement de l'outil d'enfoncement (13) ou de son support (14) en s'éloignant de la butée (23), est variable au cours de l'exécution du mouvement d'ameublissement dans le sol contre la force d'un seul ressort (22), et le levier de guidage (20) est au-dessus du levier actif (19) par rapport au sol à travailler ou parallèlement au plan du sol, et auquel est articulée la bielle (12) de la transmission à manivelle (10), et en ce que la butée (23) est prévue entre l'élément de liaison (21) et l'outil d'enfoncement (13) ou son support (14), le châssis (3) étant maintenu réglable en hauteur par un dispositif à broche (4).

2. Instrument selon la revendication 1, caractérisé en ce que la distance entre la surface d'appui de la butée (23) et sa fixation est réglable longitudinalement de préférence par le côté du levier de liaison (21).

3. Instrument selon la revendication 1 ou 2, caractérisé en ce que la butée (23) est réalisée en même temps comme amortisseur (matière amortissant les chocs) ou un dispositif d'amortissement particulier (27) (amortisseur de chocs) est prévu avec effet parallèle à la butée (23) prévue de préférence au-dessus du support d'outil (14).

4. Instrument selon l'une des revendications 1 à 3, caractérisé en ce que le ressort (22) agit par l'intermédiaire d'un bras de levier (16) autour du point d'articulation (17) du levier actif (19) sur l'outil d'enfoncement (13) ou son support et par son extrémité opposée à l'extrémité de raccordement du côté de l'outil, le levier agit sur le moyen de guidage (20, 21) notamment sur le point d'articulation (18) entre le levier de guidage (20) et le levier de liaison (21) ou directement sur le levier de liaison (21).

5. Instrument selon l'une des revendications 1 à 4, caractérisé en ce que la butée (23) et le dispositif-amortisseur (27) et de préférence aussi le ressort (22) forment un ensemble.

6. Instrument selon l'une des revendications 1 à 5, caractérisé en ce que le levier de liaison (21) ainsi que le levier de guidage (20) sont prévus de manière à entourer le levier actif (19).

7. Instrument selon l'une des revendications 1 à 6, caractérisé en ce que la bielle (12) est articulée à proximité du point d'articulation (17) entre l'outil d'enfoncement (13) ou son support (14) et le levier actif (19) au point d'articulation (24).

8. Instrument selon l'une des revendications 1 à 7, caractérisé en ce que les outils d'enfoncement (13) ou leur support (14) sont regroupés par paires ou en groupes plus importants chaque fois sur une tringlerie de bras (19, 20, 21) dans laquelle est associée une butée (23) et un ressort (22) ainsi qu'un entraînement à manivelle (10) et sont actionnés au moins en partie par des entraînements à manivelle (10) avec des bras (11) ayant des positions angulaires différentes.
